# EUROPEAN PATENT APPLICATION

(11) **EP 4 249 204 A2**
(43) Date of publication of application: **27.09.2023**
(21) Application number: 23183958.0
(22) Date of filing: 23.10.2019
(51) Int. Cl.: B29C 45/44

(54) **TETHERED PLASTIC SCREW STOPPER AND METHOD FOR MAKING THEREOF**

(62) Divisional of application: 19950169.3
(71) Applicant: Novembal USA Inc., Edison, NJ 08817 (US)
(72) Inventor: GRAUX, Stéphane, Edison 8817 (US)
(74) Representative: Sidel Group

(57) **Abstract**

The present disclosure relates to a tethered plastic screw stopper for closing a bottle. The stopper comprises a tamper band, a closure shell, and an annular strip positioned between and connected to the tamper band and the closure shell. The tamper band comprises a first bottom hinge connected to the annular strip, and the closure shell comprises a second top hinge connected to the annular strip and diametrically opposite the first bottom hinge. A bottom weakness line is positioned between the tamper band and the annular strip proximate to the bottom hinge, and a top weakness line is positioned between the annular strip and the closure shell proximate to the top hinge. Also disclosed is a method for making the tethered plastic screw stopper.

## Description

### BACKGROUND OF THE INVENTION

### 1. Field of the Invention.

This invention relates to a tethered plastic screw stopper and a method for making such a tethered plastic screw stopper.

### 2. Related Art.

This invention relates to a tethered plastic screw stopper as a sealing cap for container necks. Such containers are generally plastic or glass bottles. Usually the container is filled with a liquid.

Such stoppers usually have an overall tubular shape closed at its top edge by a top wall and the stopper comprises a closure shell. The outer face of the closure shell can comprise knurls for easy hand gripping. The closure shell is attached at its bottom end to a tamper band through bridges. Usually the bridges are regularly distributed around the closure shell and the tamper band. Moreover, the bridges are made when molding the stopper or afterwards through a cutting or slitting step.

The closure shell comprises thread(s) arranged inside side walls. Such thread(s) allows the stopper to be screwed on a bottle neck to seal it. In a bottle sealing position of the stopper, the tamper band is secured around the bottle neck through inner tamper band retaining features. Usually the retaining features comprise a collar circularly connected at the bottom edge of the tamper band.

The closure shell is removable. When bottle opening occurs, the bridges form a weakness line teared apart from the tamper band, so the closure shell is separated from the bottle. The weakness line is teared when user unscrews the closure shell, especially by hand gripping on the knurls. The tamper band securely remains on the bottle neck as a proof of tamper-evidency.

A major problem remains after opening: when the removable closure shell is lost and or dropped. Of course it is no longer possible to close the bottle, but the dropped plastic shell represents a waste if it is not recycled.

To prevent this from happening, a solution consists of linking the closure shell with the tamper band, so it becomes attached and unremovable after bottle opening. So the stopper become tethered, its closure shell attached to tamper band secured on the bottle neck. Such link has to allow bottle stopper opening and closing several times. Moreover in opening position the link and the connected closure shell must not bother the consumer when drinking.

As described in US 9,010,555 a tethered plastic screw stopper comprises a peripheral strip between a tamper band and a closure shell. Such peripheral strip is linked to the tamper band through a bottom weakness line and at the closure shell through a top weakness line. The bottom weakness line and top weakness line are parallel and extend almost the entire periphery of the stopper in order to act as a hinge or two hinges close together. When unscrewing the stopper the bottom weakness line and top weakness lines tear apart but the two hinges hold together the closure shell on the tamper band. The closure shell becomes unremovable and it toggles around the hinges beside of the bottle neck.

As proposed in U.S. Patent No. 8,490,805 a tethered plastic screw stopper comprises an helicoidal strip between a tamper band and a closure shell. Such helicoidal strip is obtained by cutting the tamper band around the stopper. Therefore a blade is placed against the outer wall of the tamper band and the stopper is moved in rotation relative to the blade according to an angular stroke greater than an entire turn, so more than 360°. Moreover during its rotation the stopper is being moved in an axial movement relative to the blade. Thus the cut line forms a helicoidal weakness line which remains attached at one end to the tamper band and at its opposite end to the closure shell after opening.

### SUMMARY

An object of the present invention is to improve a bottle tethered stopper wherein its closure shell remains attached to its tamper band after bottle opening and the tethered stopper can be moved further away from the bottle neck.

According to the invention the tethered plastic screw stopper comprises an annular strip linked with the tamper band with a bottom hinge and to the closure shell with a top hinge, the bottom hinge and the top hinge being diametrically opposite relative to the strip.

Moreover between the bottom hinge and the top hinge, the tethered stopper comprises a bottom weakness line formed with the tamper band and a top weakness line formed with the closure shell. Preferably, the bottom line and the top weakness line are parallel and horizontal.

Hence, the action of the bottle opening by unscrewing the tethered stopper tears apart the bottom weakness line and the top weakness line. The closure shell remains connected to the tamper band secured on the bottle neck through the combination of the annular strip the top hinge and bottom hinge. In the opening position, the strip allows the closure shell to be so far from the bottle neck so that it will not bother the consumer when drinking.

The invention also relates to a method to fabricate a tethered plastic screw stopper. In the method of manufacture, after stopper molding, the outer peripheral face of the tamper band is applied against two parallel bottom and top blades, the bottom and top blades being semi-circular in shape. The bottom blade comprises a cutting edge with a bottom interruption and the top blade comprises a cutting edge with a top interruption; the bottom interruption being spaced from the top interruption according to a distance equivalent to the peripheral distance chosen between the bottom hinge and the top hinge. The bottom interruption comprises an angular value equivalent to the bottom hinge length and the top interruption comprises an angular value equivalent to the top hinge length.

Thus, when stopper is moving in rotation against the bottom blade and the top blade, the bottom blade circularly slits the tamper band except at its bottom interruption corresponding to the bottom hinge section and the top blade circularly slits the tamper band except at its top interruption corresponding to the top hinge section.

Other systems, methods, features, and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### Detailed Description of the Drawings

The components in the figures are not necessarily to scale, emphasis being placed instead upon illustrating the principles of the invention. In the figures, like reference numerals designate corresponding parts throughout the different views.
Figure 1 is a diagrammatic vertical section view of a first embodiment of the tethered plastic screw stopper as molded.
Figure 2 is a diagrammatic vertical section view of the first embodiment of the tethered stopper secured on a bottle neck.
Figure 3 is a diagrammatic perspective view of the first embodiment of the tethered stopper as molded.
Figure 4 is a diagrammatic perspective view of a second embodiment of the tethered stopper on a bottle neck after bottle opening showing the tethering link.
Figure 5 is a diagrammatic view of another embodiment of the tethered stopper through a horizontal section along the top weakness line, showing an example of top hinge angle variations.
Figure 6 is a diagrammatic view of another embodiment of the tethered stopper through a horizontal section along the bottom weakness line, showing an example of bottom hinge angle variations.

### DETAILED DESCRIPTION

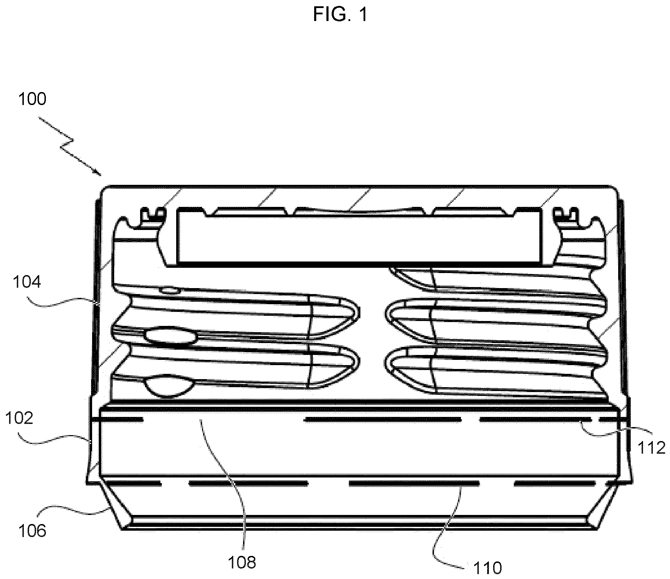

Figure 1 is a diagrammatic vertical section view of a first embodiment of the tethered plastic screw stopper as molded. A tethered plastic screw stopper 100 for closing a bottle neck 200 globally has a tubular shape. The stopper 100 is integrally made of one plastic piece by a prior molding fabrication step. The stopper 100 comprises a tamper band 102 and a closure shell 104. The tamper band 102 and the closure shell 104 are so linked together, the tamper band 102 being top connected around the bottom of the closure shell 104.

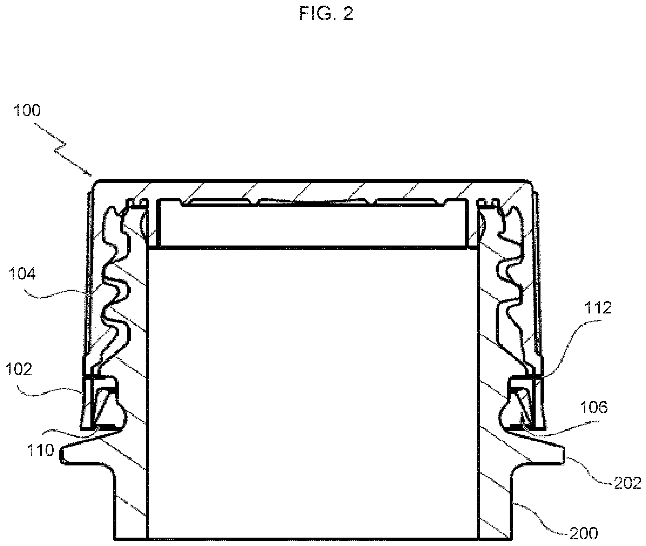

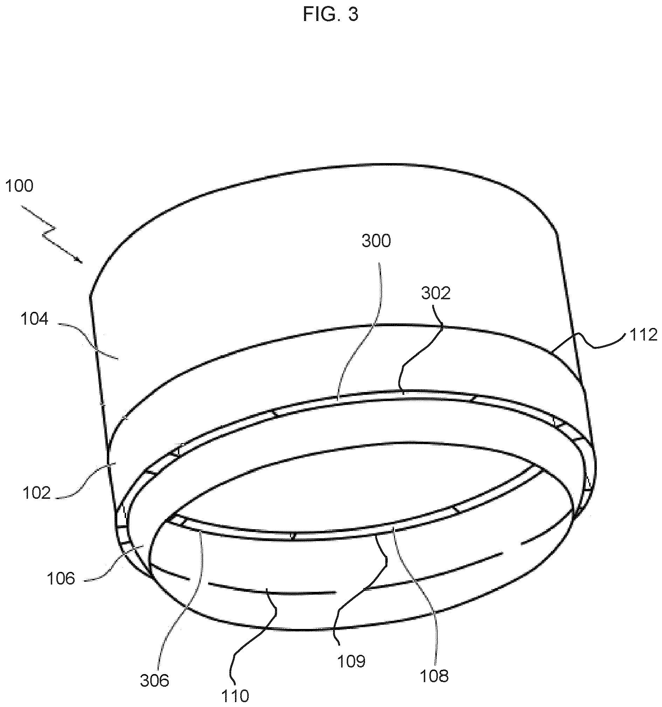

At its bottom edge the tamper band 102 comprises retaining features. The retaining features secure the stopper 100 when sealing the bottle neck 200. Such as shown in the first embodiment represented in Figures 1 and 3, the retaining features are made of a collar 106. Usually, after the collar 106 is inverted inside the tamper band 102, in bottle sealing the collar 106 locks the tamper band 102 and the entire stopper 100 against a ring managed around the bottle neck 200. Such bottle sealing in a secure position of the stopper is shown in Figure 2.

The invention can get the closure shell 104 so that it is unremovable from the tamper band 102, secured to the bottle neck 200 after opening. Therefore, an annular strip 400 is made between the tamper band 102 and the closure shell 104. So the tamper band 102 and the closure shell 104 are connected through the strip 400.

Moreover, the tamper band 102 comprises a first bottom hinge 300 connected to the annular strip 400. The closure shell 104 comprises a second top hinge 108 connected to the annular strip 400. The first bottom hinge 300 and the second top hinge 108 are diametrically opposite relative to the annular strip 400. So after opening, by unscrewing the stopper 100 from the bottle neck 200, the strip 400 is twisted or bent but retains the closure shell 104 which is still linked to the tamper band 102 secured on the bottle neck 200. Thus the closure shell 104 cannot be lost or dropped off the bottle.

Before opening, the strip 400 is linked along its peripheral length to the stopper 100. Especially the strip 400 is linked at its bottom edge along the tamper band 102 and its top edge along the closure shell 104. In order to separate the strip 400 from the tamper band 102 and the closure shell 104, except at the bottom hinge 300 and the top hinge 108, the stopper 100 first comprises a bottom weakness line 110 between the tamper band 102 and the annular strip 400. Then the stopper 100 comprises a top weakness line 112 between the closure shell 104 and the annular strip 400.

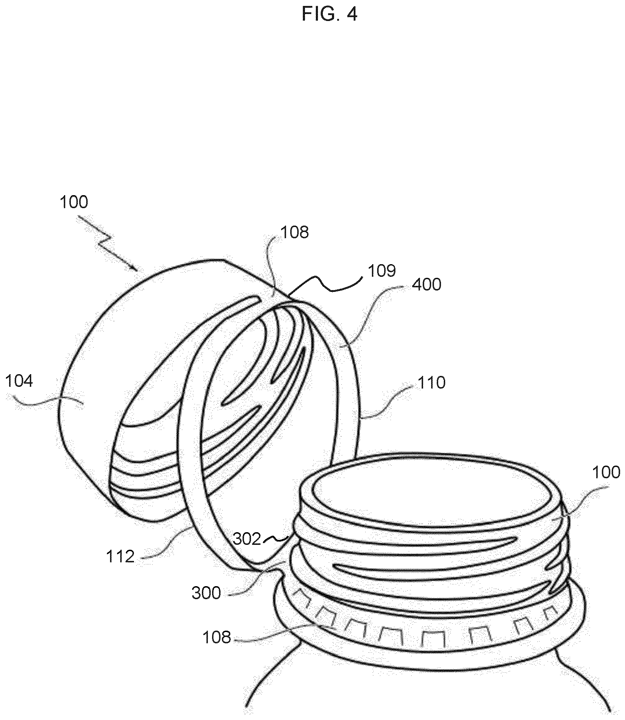

So, during opening, the bottom weakness line 110 and the top weakness line 306 can be teared until totally being respectively disconnected from the tamper band 102 and the closure shell 104. Thus the strip 400 forms a ring, such as shown in Figure 4.

In the preferred first embodiment, the strip 400 is straight or rectilinear. Therefore the bottom weakness line 110 and top weakness line 112 may be parallel and horizontal. In other embodiments, not shown in the Figures, the strip 400 is inclined and/or the bottom weakness line 110 and the top weakness line 112 are not parallel, convergent or divergent from the bottom hinge 300 to the top hinge 108.

In the first embodiment, the tamper band lower portion comprises the collar 106 with retaining features. Thereby the bottom weakness line 110 is formed between the tamper band 102 and the collar 106, so at the lower edge of the tamper band 102.

As previously described the strip 400 extends around the tamper band 102, first along the bottom weakness line 110 from one end of the bottom hinge 300 to its opposite end, and then along the top weakness line 112 from one end of the top hinge 108 to its opposite end.

Depending on different embodiments, the bottom hinge 300 can angularly extend from 5° to 90° around the annular strip 400. So, an angular value 600 of the bottom hinge 300 can be a minimum of 5° and a maximum of 90°, and any angular value between such an interval. The rest of the strip angular length is made by the weakness lines 110 and 112 and the bottom hinge 300.

Depending on the different embodiments, the top hinge 108 can angularly extend from 5° to 90° around the annular strip 400. So an angular value 500 of the top hinge 108 can be a minimum of 5° and a maximum of 90°, and any angular value between such an interval. So the rest of the strip angular length is made by the weakness lines 110 and 112 and the top hinge 108.

Each of the bottom hinge 300 and of the top hinge 108 can independently extend about different angles. These angle values 500 and 600 have to be considered before the tethered stopper 100 is applied for sealing the bottle.

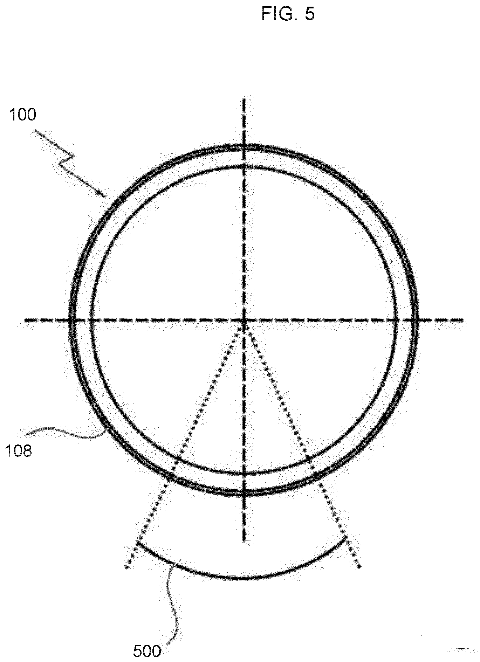

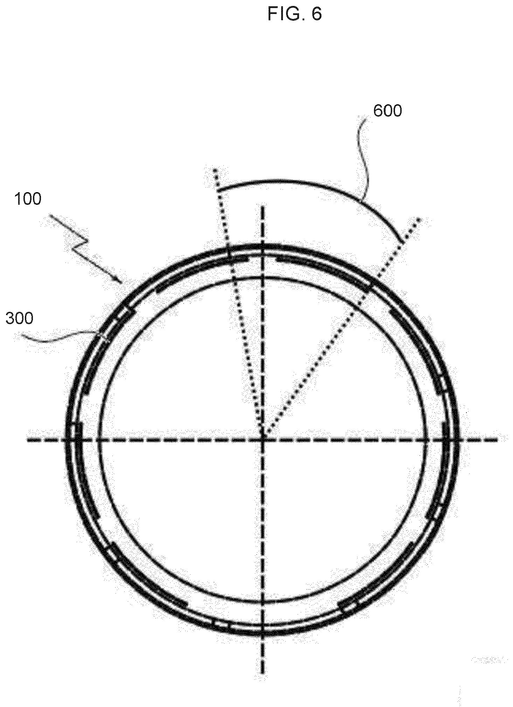

The bottom hinge 300 is about diametrically opposite to the top hinge 108. Such as shown in Figures 5 and 6, the bottom hinge 300 and the top hinge 108 can be angularly unsymmetrical relative to the center of the stopper 100.

In Figure 5, a horizontal section view along the top weakness line 110, the angular value 500 of the top hinge 108 is centered on a represented median vertical axe. Compared to Figure 6, a horizontal section view along the bottom weakness line 108, the angular value 600 of the bottom hinge 300 is not symetrically centered on the median vertical axe. The difference of orientation of the bottom hinge 300 relative to the top hinge 108 can extend from 160° to 200°.

Therefore, the invention includes a method for making a tethered plastic screw stopper 100 for closing a bottle neck 200. The method involves cutting the strip 400 from the tamper band 102 through slitting of the bottom weakness line 110 and of the top weakness line 112, once stopper 100 is molded. Such slitting is made through the thickness of the tamper band 102. Especially the slitting can be made almost all the thickness of the tamper band 102, but not totally.

In other embodiments, the slitting can be made by totally cutting through the entire thickness of the tamper band 102, but only at spaced intervals, regularly spaced apart or not, in order to create bridges. Thus, such bridges are teared to separate the strip 400 off.

Therefore according to the method of the invention the stopper 100 is molded in order to manage a tamper band 102 and a closure shell 104, the tamper band 102 and the closure shell 104 being peripherally connected. Such as above described the stopper 100 is molded in an entire piece of plastic material.

Then the outer face of tamper band 102 is simultaneously applied against two parallel bottom blade and top blade. The stopper 100 is moved in rotation relatively to the two top and bottom blades, thus the bottom blade slits a bottom weakness line 110 at the bottom of the tamper band 102 and the top blade slits a top weakness line 112 at the top of the tamper band 102.

Moreover, the bottom blade comprises a bottom interruption to manage a bottom hinge 300 unslitted along the bottom weakness line 110 and the top blade comprises a top interruption to manage a top hinge 108 unslitted along the top weakness line 112. The bottom interruption and the top interruption are spaced respectively corresponding to an angular stroke between the bottom hinge 300 and the top hinge 108.

The bottom interruption can angularly extend from 5° to 90°, while the top interruption can independently angularly extend from 5° to 90°. The space between the bottom and top interruptions can be comprised between half of a turn minus the angular lengths of each of the bottom and top interruptions.

Ideally, the bottom blade and the top blade are preferably at a standstill. The stopper 100 is moved in rotation along the bottom blade and the top blade. Such rotative movement along one blade is used to cut the plastic stopper 100.

While various embodiments of the invention have been described, it will be apparent to those of ordinary skill in the art that many more embodiments and implementations are possible that are within the scope of this invention.

## Claims

1. A tethered plastic screw stopper (100) for closing a bottle neck (200), comprising
a tamper band (102) and a closure shell (104); and
an annular strip (400) between the tamper band (102) and the closure shell (104) where the tamper band (102) and the closure shell (104) are connected through the strip (400); and where the tamper band (102) further comprises a first bottom hinge (300) connected to the annular strip (400), the closure shell (104) further comprises a second top hinge (108) connected to the annular strip (400), the top hinge (108) extending angularly from 5° to 90° around the annular strip (400), the first bottom hinge (300) and the second top hinge (108) positioned diametrically opposite relative to the annular strip (400), so after opening, by unscrewing the stopper (100) from the bottle neck (200), the strip (400) is twisted or bent but retains the closure shell (104) which is still linked to the tamper band (102) secured on the bottle neck (200)
and where, between the first bottom hinge (300) and the second top hinge (108), the stopper (100) comprises a bottom weakness line (110) between the tamper band (102) and the annular strip (400) and a top weakness line (112) between the closure shell and the annular strip.

2. The tethered plastic screw stopper (100) for closing a bottle neck (200) according to claim 1, where the bottom hinge (300) angularly extends from 5° to 90° around the annular strip (400).

3. The tethered plastic screw stopper (100) for closing a bottle neck (200) according to claim 1 or 2, where the bottom weakness line (110) and the top weakness line (112) are parallel and horizontal.

4. The tethered plastic screw stopper (100) for closing a bottle neck (200) according to claim 3, where the tamper band (102) bottom comprises a collar (106), where the collar (106) further comprises retaining features, and the bottom weakness line (110) is formed between the tamper band (102) and the collar (106), so at the lower edge of the tamper band 102.

5. A method for making a tethered plastic screw stopper (100) for closing a bottle neck (200), comprising the steps of:
molding the stopper to manage a tamper band and a closure shell, where the tamper band and the closure shell are peripherally connected;
applying a force to the outer face of tamper band against two parallel blades; and
rotating the stopper relative to the two parallel blades, thus a first blade slits a bottom weakness line at the bottom of the tamper band and a second blade slits a top weakness line at the top of the tamper band and the second blade comprises a bottom interruption to manage a bottom hinge unslitted along the bottom weakness line and the first blade comprises a top interruption to manage a top hinge unslitted along the top weakness line, the bottom interruption and the top interruption being spaced respectively corresponding to an angular stroke between the bottom hinge and the top hinge.

6. The method for making a tethered plastic screw stopper (100) for closing a bottle neck (200) according to claim 5, where the first and second blades are standstill and the stopper is moved in rotation along the first and second blade.
